# EUROPEAN PATENT APPLICATION

(11) **EP 2 859 788 A1**
(43) Date of publication of application: **15.04.2015**
(21) Application number: 13803660.3
(22) Date of filing: 06.06.2013
(51) Int. Cl.: A01G 9/00

(54) **VERTICAL LANDSCAPING SYSTEM**

(30) Priority: 12.06.2012 ES 201200625
(71) Applicant: Plata Orte, Jose Ignacio, 01013 Vitoria (Alava) (ES)
(72) Inventor: Plata Orte, Jose Ignacio, 01013 Vitoria (Alava) (ES)
(74) Representative: Lehmann Novo, Maria Isabel
(86) International application number: PCT/ES2013/000136
(87) International publication number: WO 2013/186406

(57) **Abstract**

The system is based on hanging a series of baskets (4) of lattice walls on which the substrate or meshes with substrate for the plants are available, being hung said baskets (4) or guides (1) attached by screws to a wall (3) forming a vegetable planting vertically attached against the wall, either on poles (2) independently attached forming separations or divisions between private or public areas in order to isolate two enviroments. Both guides and poles are complemented by a drip irrigation system and lighting system, being able to have the baskets (4) in linear, square, cross or forming different configurations or placements. Attaching of the posts to the ground can be made directly or by telescopic base anchored to the ground

## Description

### OBJECT OF THE INVENTION

This invention relates to a vertical landscaping system, with a modular configuration, the purpose of which is to form a vertical planting system based on a series of planters consisting of special baskets conveniently hung from posts or guides and which may be either adjacent to or separate from a wall.

The object of the invention is to create a thin plant coverage which may reach the desired length and height by simply adding modules in either direction, generating a separating element between different plots, terraces or areas. In addition to the said separating function, the invention also contributes to improving sound and heat insulation, while providing visual and landscaping appeal.

### BACKGROUND OF THE INVENTION

Numerous types and varieties of landscaping exist, on the basis of planting any type of plants in the ground or in plantpots, these plants being hung in some cases or, in most cases, resting on the ground itself.

However, to obtain a vertical planting system constituting an optimum means of decoration and also able to separate two areas, the only current solution is planting a fence and planting plants in the ground, so that the said plants, which are normally climbing plants or similar, grow along the fence, which usually consists of a mesh of some type, in order to create what may be considered a system for separating different areas or a planting system adjacent to a wall.

In any case, the currently existing planting systems are not intended to form a vertical but rather a horizontal landscaping system, and consequently when a vertical landscaping system is desired numerous problems and disadvantages arise due to lack of available means.

### DESCRIPTION OF THE INVENTION

The proposed system aims to overcome the aforementioned problems on the basis of hanging a series of baskets between posts or guides, said baskets being of different shapes and materials and having latticed walls, wherein substrate or mesh with substrate and plant seeds, or already rooted plants, are placed, the baskets thus forming a kind of planters, which, being arranged between vertical posts or guides either adjacent to the wall or totally separate and away from the wall, may constitute a vertical planting system providing colour and aroma when placed adjacent to a wall, or, when installed separately, a means of separating plots, terraces or areas, with no walls being required, and forming a natural noise barrier in any case.

Organic gardens or orchards may similarly be created with no large areas of ground being required, increasing the plant cover in cities and improving the air quality of the environment.

When the landscaping system is installed adjacent to a wall, vertical guides screwed to the wall itself are used, said guides consisting of C-profiles with holes for threading and attaching the screws, and with large holes for the purpose of hooking the elements for hanging the baskets; said baskets may have different configurations and dimensions, as has been previously mentioned, and may be latticed, with a U-profile wherein the openings are of variable shapes and dimensions and of variable number.

The posts will either be directly screwed into the ground, or secured by interposition of telescopic bases previously anchored to the ground, to which the height-adjustable posts are attached in order to provide a greater or lesser height for the posts and consequently for the modules that will form the landscaping system. In case of installation on non-solid ground, a conventional footing with its corresponding anchoring hooks may be used.

Both the guides and the posts may be complemented by pipes associated with interior supply systems for direct irrigation of the planting system, the said irrigation being performed by means of drip sets associated with the supply systems. The guides or posts are also a means for passage and attachment of electrical cable conduits, which may be used for a lighting system for the whole unit, using LED holders conveniently closed by means of supports consisting of small flat parts attached to the post or planter that allow suitable lighting components to be mounted.

The posts may incorporate a means of enabling the baskets to be arranged in an aligned manner, at an angle, in T-formation or even crosswise, including end posts which, as has been previously mentioned, may be directly screwed into the ground or attached to the ground by screws or to a telescopic base.

The telescopic base specifically consists of a lower base screwed into the ground from which a vertical element protrudes upwards, the lower end of the post being telescopically attached to said element, so that the post may be fixed at different heights with respect to the said element protruding from the base for anchoring to the ground.

When the post is attached directly to the ground, without the said telescopic base, a footing is used, taking the form of a box with suitable anchoring hooks.

The telescopic nature of the posts enables the system to be used with irregular walls, the telescopicity of the posts rectifying the level differences of the base ground.

Also, either one or both faces of the planting system baskets may be used, forming a means of decoration on both sides or on a single side only, as desired.

The baskets are hung on the guides or posts by means of elements consisting of screws and their corresponding nuts, the screws of these elements protruding from the wall or walls, the said guides being attached to a wall or attached linearly forming a separation, so that in any case the said hanging elements are complemented by screws with riveted nuts, the attachment of the screws also including a safety plate to prevent theft or falls.

It is also foreseen for the system to include modules which may be attached to the actual hanger guides on the baskets, or to the posts, the modules whereof are complemented by solid wood cladding or a structure wherethrough the plants or climbers may grow.

The irrigation system will be realised by means of pipes containing a drip-irrigation system, obtaining uniform low-flow self-compensating drip irrigation throughout the entire system, water distributors also being housed inside the posts, both in the supply system and the continuity of said irrigation system, the posts also being complemented by cable ducts through which the power supply devices may be run for the lighting system that may complement the planting system.

The distributors may have either one connection in the case of end posts, two opposing connections in the case of aligned connections, two connections at 90° when the connections are at an angle, three connections consisting of two opposing connections and one connection perpendicular to said opposing connections in the case of connections in T-formation, or even four opposing connections arranged in pairs in the case of crosswise connections.

The irrigation system is complemented by a water collection tray, for both the excess irrigation water and rainwater, the water or waters being stored in a tank for subsequent reuse by means of a suitable programmed pumping system.

Also, the irrigation pipes or conduits are supported on their corresponding baskets by plates, said plates having a hole for attachment to the basket and a circular slot for supporting the irrigation conduit or pipe.

The water collection trays will have windows for attachment to the corresponding basket, and holes for attachment of elements to join them to other trays, thus enabling the length to be extended as desired.

The lighting system is based on a series of LED diodes or bulbs arranged on an elongated profile, thus obtaining lighting with low energy consumption and no light pollution and designed so as not to damage the plant coverage, the said lighting system being incorporated to the corresponding posts, with the relevant means of attachment to the same, and the lighting being either on one side only or on both sides, according to whether only one face or side of the modular landscaping system is to be illuminated, or both.

Finally, the baskets may be filled with different natural elements, such as natural substrate, white stones, sphagnum, bark, etc., so that in any case the vertical landscaping system provides a series of advantages and features that can be summarised as follows:
- Creation of vertical gardens or orchards, obtaining a thin vertical plant coverage.
- Possibility of creating separating elements between plots, terraces or areas, with no walls being required.
- Provision of colour, aroma, noise insulation and heat insulation in the area in which the system is installed.
- Inclusion of self-compensating drip irrigation and collection of excess irrigation water or rainwater.
- Possibility of incorporating a lighting system for a garden, orchard or decorative wall, so that it may be appreciated both by day and by night, without damaging the plant coverage.

### DESCRIPTION OF THE DRAWINGS

To complement the description to be made hereinafter and to aid understanding of the features of the invention, according to a preferred practical embodiment thereof, a set of drawings is attached as an integral part of said description, representing the following, with an illustrative and non-limiting character:

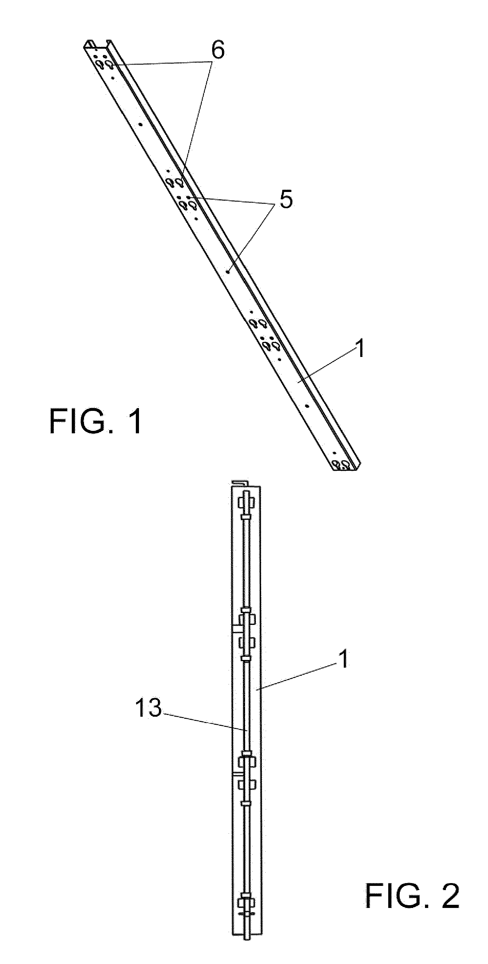

Figure 1.- Shows a general perspective of a guide used for vertical attachment adjacent to a wall.
Figure 2.- Shows a front view of the guide represented in the previous figure, incorporating an irrigation pipe.
Figure 3.- Shows a view of a type of post for installation on solid ground and used for hanging baskets in an aligned manner.
Figure 4.- Shows a view of a type of post for installation on solid ground and used for hanging baskets at an angle.
Figure 5.- Shows a view of a type of post for installation on solid ground and used for hanging baskets in T-formation.
Figure 6.- Shows a view of a type of post for installation on solid ground and used for hanging baskets crosswise.
Figure 7.- Shows a view of a type of post for installation on solid ground and used for hanging baskets on an end post.
Figure 8.- Shows the types of water distributors used with the posts represented in Figures 3 (aligned linearly), 4 (at an angle), 5 (in T-formation), 6 (crosswise) and 7 (end post).
Figure 9.- Shows a plan view of forms of installing the system as referred to in previous figures.
Figure 10.- Shows a horizontal cross section of a wall on which the modular vertical landscaping system to which the invention relates is installed, the baskets hanging on the corresponding guides attached to the wall.
Figure 11.- Shows a perspective view of the telescopic base to which a post may be attached.
Figure 12.- Shows the form of the elements involved in hanging or attaching the baskets.
Figure 13.- Shows a perspective view of a basket with the hanging elements shown in the previous figure, on both the sides and front of the basket, for attaching to and hanging from posts, or for attaching to and hanging from guides.
Figure 14.- Shows perspective views of some of the numerous possible forms of the baskets involved in the vertical landscaping system to which the invention relates.
Figure 15.- Shows a perspective view of wood cladding on modules that may be attached between posts.
Figure 16.- Shows a structure that may also be attached between posts for training climbing plants.
Figure 17.- Shows a side and front view of the form of implementing an irrigation system which is also involved in the system to which the invention relates.
Figure 18.- Shows a detail of the inside of a post incorporating a water distributor and a cable duct.
Figure 19.- Shows a detail perspective view of the manner of attachment of the irrigation conduits to the baskets, by means of a plate.
Figure 20.- Shows a perspective view of a tray with the parts involved in continuous joining to other trays.
Figure 21.- Shows a perspective view of the profile constituting the support for LED bulbs as part of the lighting system incorporated to the landscaping system.
Figure 22.- Shows a front view of the arrangement of baskets between posts, arranged on a single level.
Figure 23.- Shows, lastly, a view similar to that of the previous figure, but in this case with a level arranged by stacking three baskets.

### PREFERRED EMBODIMENT OF THE INVENTION

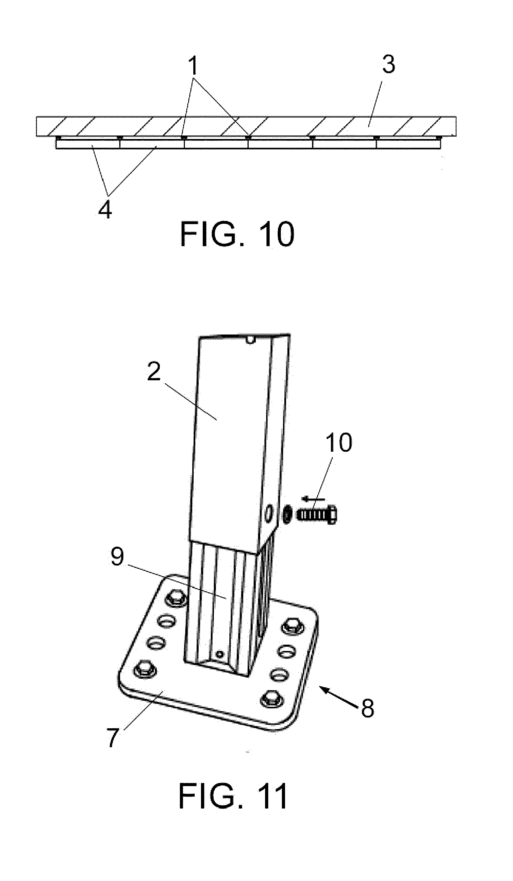

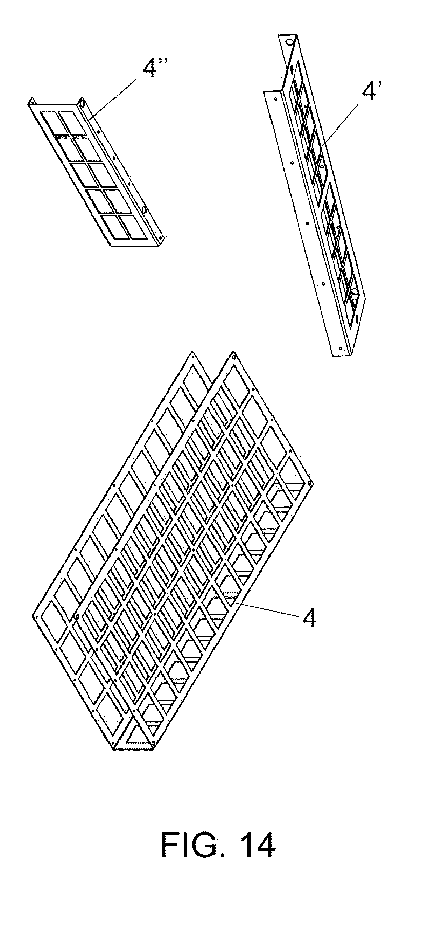

As shown in the aforementioned figures, the system to which the invention relates is based on a series of guides (1) or posts (2), in the former case being attached to a wall (3) by screws or any similar system, as shown in figure 10, in which case a series of baskets (4) are hung from these guides (1), or with any other configuration (4', 4"), figure 14 showing three example embodiments of the baskets, although the dimensions, configuration and number of the baskets and the size and form of the holes determining the latticing of the said baskets may be variable.

In any case, there are small holes (5) in the guides through which the screws pass for attachment to the wall (3), said guides also having pairs of wide holes (6) of a larger size and elongated in shape, for hanging the actual baskets (4), by means of elements that will be described hereinafter.

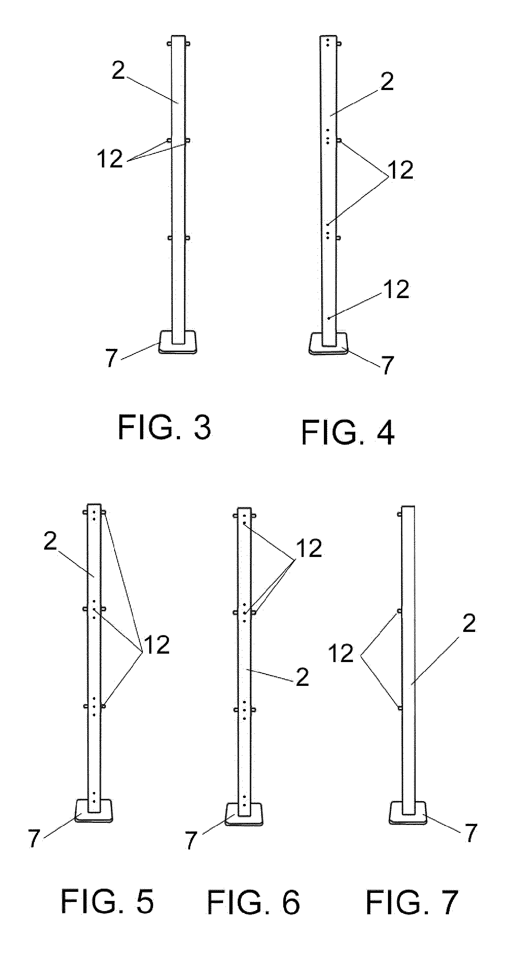

The posts (2) shown in Figures 3, 4, 5, 6 and 7 are tubular, preferably rectangular or quadrangular, and will be attached to the ground and separated from the wall, either directly by means of a lower plate (7) directly screwed into the ground or to a footing in the case of non-solid ground, or by attachment to a telescopic base (8), as shown in Figure 11. Said telescopic base (8) is equipped with a suitable lower plate (7) for attachment to the ground, from which a vertical portion or element (9) protrudes, the corresponding post (2) being tightly coupled thereto, said post being fixed at a higher or lower height by means of a screw (10), as shown in said Figure 11.

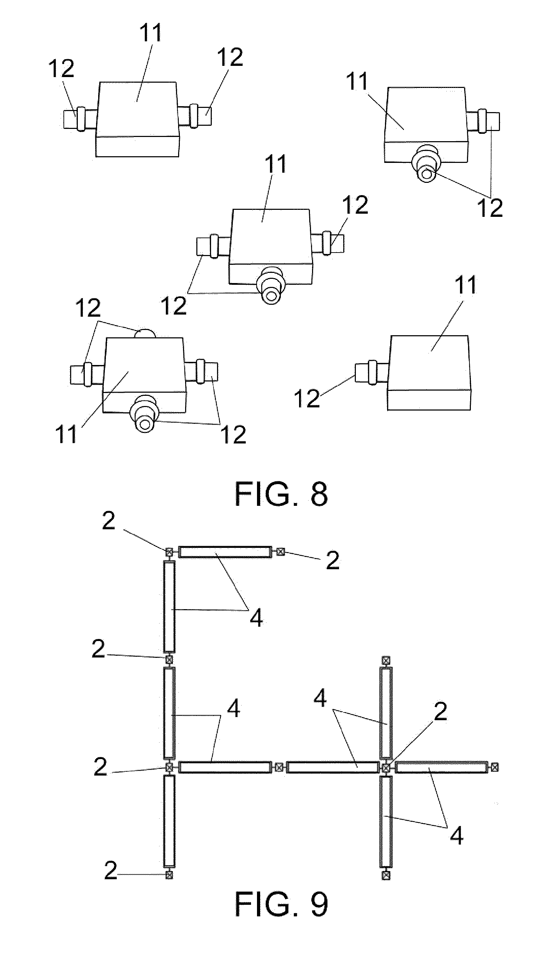

Water distributors (11) are housed inside the posts (2), as shown in figure 8, said water distributors incorporating connections (12), either opposite to each other or at an angle, in T-formation, crosswise, or with one single connection as a terminal, for arrangement in the posts shown in figures 3, 4, 5, 6 and 7 respectively, so that they may be coupled together in an aligned manner, at an angle, in T-formation or crosswise, as shown in figure 9.

Both the posts (2) and the guides (1) may be complemented by pipes (13) for drip irrigation, as will be described hereinafter.

The system described herein may be placed adjacent to walls, as shown in figure 10, so that the corresponding planting system on the baskets (4) provides decoration and even improves noise and heat insulation, so that in the case of the baskets (4) being installed between posts (2) it may constitute a means of separation between plots or terraces or form divisions between private or common spaces, no wall being required and a natural noise barrier being constituted in any case. In all the cases the baskets (4) are hung from the guides (1) or posts (2), and may be planted on one or both sides, logically on one side only in the case of a wall, and decorated on one or both sides when they are hung between posts.

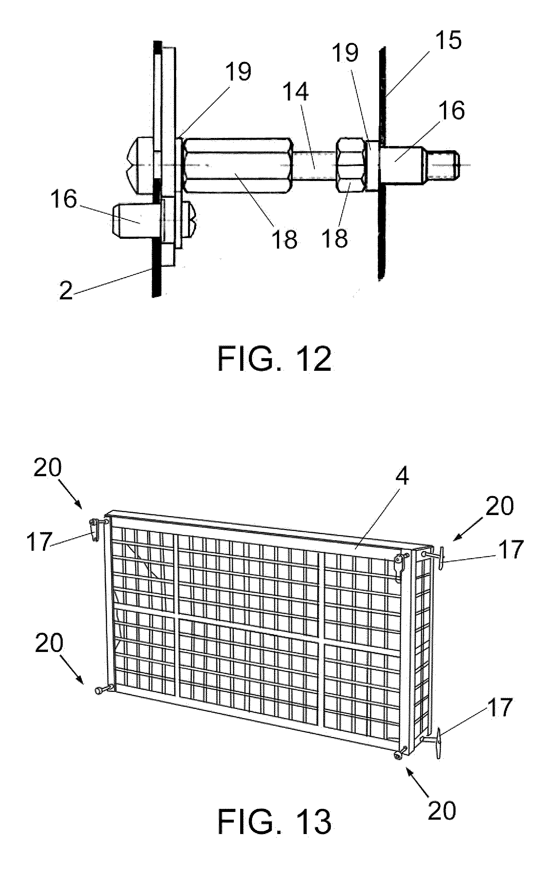

The means of hanging the baskets (4), as shown in figures 12 and 13, will consist of screws (14) attached to the corresponding side or rear part (15) of the basket (4) by means of a riveted nut (16), while in the front part the said screw (14) passes through the wall of the post (2) and is complemented by a safety plate (17) fixed by means of another screw with a riveted nut (16), analogous to the one mentioned hereinabove.

The screw (14) is fixed between the post and the side or rear of the basket by means of nuts (18), with insertion of suitable washers (19).

The unit or system for hanging the baskets (4), as described in accordance with figure 12, is as referred to in general by number (20) in figure 13.

That is, the said hanging elements (20) for the baskets may be attached to either the sides or the rear part of the basket (4), as shown in figure 13, for attachment to posts (2) in the former case, in linear continuity with other baskets (4), or for attachment to guides fixed to walls, the baskets (4) being adjacent to said walls.

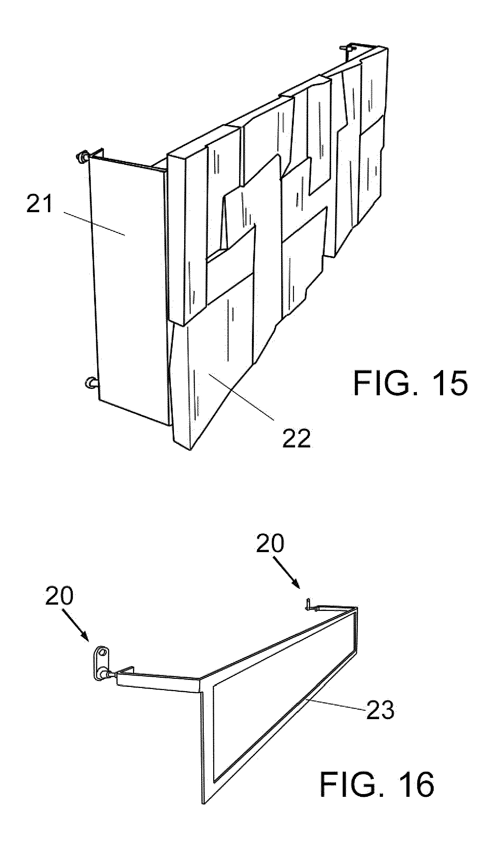

Figure 15 shows a module (21) which is attached to the guides (1) or posts (2), said module (21) being complemented by wood cladding (22) to form decorative elements.

Figure 16 shows a structure (23), also equipped with said anchoring or hanging elements (20), the posts or the baskets, for the purpose of training the climbing plants.

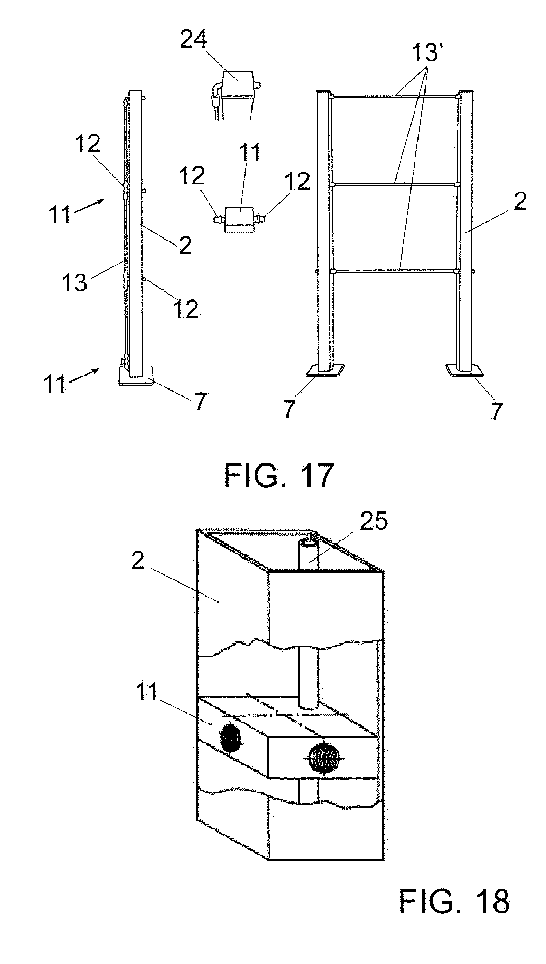

Figure 17 shows the irrigation system consisting of the pipe (13) connected to the corresponding water distributors (11) as mentioned hereinabove, with connections (12) enabling the different configurations shown in figure 9.

The said water distributors (11) are connected to the conduits or pipes (13') with a low-flow self-compensating drip irrigation system, this being uniform throughout the entire system, the water distributors (11) being located on the posts (2) or guides (1) to enable their connection to the irrigation conduits or pipes (13') by means of the connections (12). Said figure 17 shows the upper connection (24) of the posts (2) for connection of the pipe (13) and its distribution to the corresponding water distributors (11).

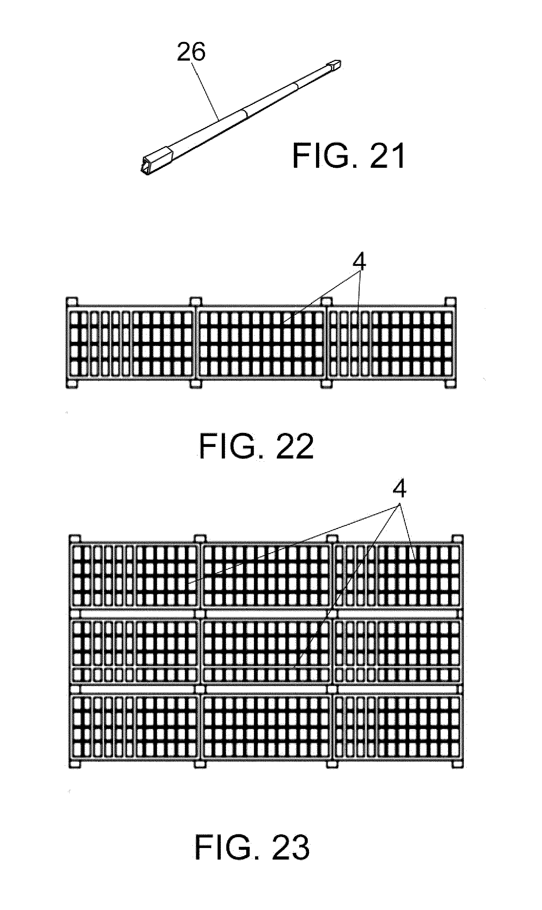

Figure 18 shows a section of a post (2) with a water distributor (11) through which a cable duct (25) also passes, running inside the actual post (2), insulating the power supply cabling for the corresponding lighting system, said lighting system consisting of supports (26), as represented in figure 21, on the support (26) whereof LEDs will be placed enabling lighting with low energy consumption and no light pollution, these supports (26) being elongated and consisting of profiles, duly attached to the guides (1), posts (2) or actual baskets (4), constituting an upper or lateral lighting element for the actual vertical landscaping system described, with the particularity of it being foreseen that the said supports (26) may be implemented so as to enable lighting of either one of the faces or of both faces of the separator or divider that may be constituted by the planting system in question, where the case may be.

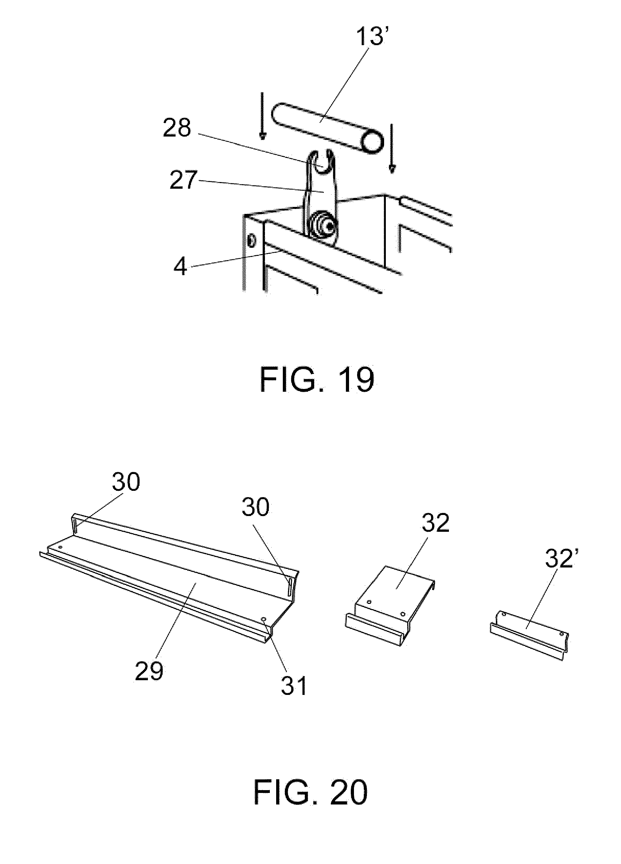

It is also noteworthy that the irrigation system pipes (13') are supported on the baskets (4) or, where the case may be, on the posts (2), by means of parts consisting of plates (27) attached to the said basket (4) or post (2), whereupon the said plate (27) has a circular notch (28) in its upper part for support and for close-fitting positioning of the actual conduit or pipe (13'), as shown in figure 19.

The trays (29) have a special configuration, as shown in figure 20, and are equipped with windows or grooves close to their outer edges. The purpose of said windows or grooves (30) is for attachment to the corresponding basket, the said trays also being equipped with holes (31) for connecting parts (32) which are fixed in overlapping manner between adjacent trays (29), thus creating continuity between said trays and enabling collection trays of the desired length to be obtained.

As can be seen, the said connecting parts (32) are configured in accordance with the configuration of the tray (29), in order to achieve uniform continuity.

Other connecting parts (32') are also foreseen for the case of use with guides (1) for hanging the baskets (4).

Finally, figures 22 and 23 show examples of different heights that may be obtained by arranging one or three baskets (4) at different levels, thus obtaining either a single height, corresponding to a basket as shown in figure 22, a double height, corresponding to the height obtained by stacking two baskets, or even a triple height, as shown in figure 23, in which three baskets have been stacked.

## Claims

1. Vertical landscaping system realisable in any dimension in height or in length, for obtaining a vertical planting system on walls and/or for forming separations or divisions between common and/or private areas such as plots, gardens, terraces or others, **characterised in that** it has a modular configuration on the basis of a number of baskets (4) that are substantially flat and hung removably from vertical posts (2) attached to the ground or from guides (1) attached vertically to a wall (3), the walls of the baskets (4) being latticed; with means of irrigation and water recovery forming part of the overall system, in addition to lighting.

2. Vertical landscaping system, according to claim 1, **characterised in that** the guides (1) consist of rectangular profiles with one open side, the opposite side having pairs of large holes (6) for the purpose of hooking hanging elements (20) with which the baskets (4) are provided for this purpose, the baskets also having small holes (5) through which screws will pass for attaching the guides to a wall (3), said guides remaining adjacent to the same.

3. Vertical landscaping system, according to claim 1, **characterised in that** the posts (2) are tubular, and rectangular or quadrangular in shape.

4. Vertical landscaping system, according to claim 3, **characterised in that** the posts (2) are attached directly to the ground by means of a lower plate (7) screwed to said posts, or a footing in the case of non-solid ground.

5. Vertical landscaping system, according to claim 3, **characterised in that** the posts (2) are installed and attached to the ground on a telescopic base (8).

6. Vertical landscaping system, according to claim 3, **characterised in that** the side faces of the posts (2) are equipped with elements formed by holes (6) and collars or means of connection (12) belonging to water distributors (11), enabling the baskets (4) to be fixed either in an aligned manner, at an angle, in T-formation or crosswise.

7. Vertical landscaping system, according to previous claims, **characterised in that** both the guides (1) and the posts (2) may be complemented by irrigation water pipes (13), with drip sets, said pipes (13) being connected to water distributors (11) provided for this purpose inside the posts (2), said water distributors (11) being equipped in each case with suitable collars or means of connection (12) for connection either in an aligned manner, at an angle, in T-formation, crosswise or as end posts.

8. Vertical landscaping system, according to claim 6, **characterised in that** a cable duct (25) is incorporated axially inside the posts (2) for power supply to the means of lighting, guided and attached by means of the water distributors (11).

9. Vertical landscaping system, according to claim 1, **characterised in that** the baskets (4) have a U-shaped transversal cross-section, of variable dimensions in length, width and height, the openings which form the latticing of the baskets preferably being rectangular or quadrangular in shape, and variable in size and number, depending on the dimensions of the actual basket (4) and the type of planting system.

10. Vertical landscaping system, according to claims 1-3, **characterised in that** the hanging elements (20) of the baskets (4) are mounted on the sides and/or rear of said basket, for hanging between posts (2) or on guides (1), said hanging elements (20) consisting of screws (14) with nuts (18) and a riveted end nut (16) for attachment to the corresponding side or rear (15) of the basket (4), also including a safety plate (17) to prevent theft or falls, attached by a riveted nut (16) to the corresponding wall of the corresponding post (2).

11. Vertical landscaping system, according to claim 10, **characterised in that** the safety plates (17) consist of flat parts with pairs of holes for the fixing screws (14) and the riveted nuts (16).

12. Vertical landscaping system, according to claim 1, **characterised in that** it includes wood cladding (22) mounted on modules (21) which may be attached to the guides (1) and/or posts (2).

13. Vertical landscaping system, according to claim 1, **characterised in that** it includes a structure (23) attached to the posts (2) and/or guides (1), for training twining or climbing plants.

14. Vertical landscaping system, according to claim 1, **characterised in that** it includes a tray (29) for collecting excess irrigation water and rainwater.

15. Vertical landscaping system, according to claim 14, **characterised in that** the water collection tray (29) is equipped with windows or grooves (30) for attachment to the corresponding baskets (4), being complemented by suitable profile parts (32, 32') for joining the trays (29) linearly and for attaching them to the guides (1).

16. Vertical landscaping system, according to claims 14 and 15, **characterised in that** the excess irrigation water and rain water are channelled to a tank for subsequent reuse by means of a pumping system.

17. Vertical landscaping system, according to claim 1, **characterised in that** the lighting system consists of supports (26) consisting of elongated profiles on which the lighting LEDs are arranged, attached to both the posts (2) and the actual baskets (4), said supports (26) being provided for use as a means of lighting of one or both sides of the baskets (4).

18. Vertical landscaping system, according to claim 7, **characterised in that** the irrigation system constituted by pipes (13) running through the guides (1) or posts (2) is connected to the corresponding connections (24) made at the upper end of said posts or guides, interconnecting the water distributors (11) and connecting said water distributors to conducts or pipes (13') equipped with a drip irrigation system.

19. Vertical landscaping system, according to claim 5, **characterised in that** the telescopic bases (8) consist of a lower plate (7) for attachment to the ground, with a vertical element (9) protruding from this lower plate (7) to which the corresponding post (2) is inserted and coupled telescopically, said post being attachable at any height to this vertical element (9) by means of a screw (10).

20. Vertical landscaping system, according to claim 1, **characterised in that** a substrate or mesh containing substrate, suitable for germination and growth of the plants, has been provided inside the baskets (4).

21. Vertical landscaping system, according to claim 1, **characterised in that** a decorative fill has been provided inside the baskets (4).

22. Vertical landscaping system, according to claim 1, **characterised in that** when the baskets (4) are hung on the guides (1) attached to the actual wall (3) the baskets (4) have one single face suitable for a planting system.

23. Vertical landscaping system, according to claim 1, **characterised in that** when the baskets (4) are hung on posts (2) attached to the ground, separate from the walls, in order to create divisions or separations between areas, the baskets (4) have one or more faces suitable for a planting system.
